# EUROPEAN PATENT APPLICATION

(11) **EP 1 553 472 A1**
(43) Date of publication of application: **13.07.2005**
(21) Application number: 04029806.9
(22) Date of filing: 15.12.2004
(51) Int. Cl.: G05D 1/02, H04L 12/00, H04L 29/00

(54) **Remotely controlled vehicle using wireless LAN**

(30) Priority: 31.12.2003 US 751279
(71) Applicant: ALCATEL, 75008 Paris (FR)
(72) Inventor: Yeh, Chiang, Sierra Madre, CA 91024 (US)
(74) Representative: Schäfer, Wolfgang, Dipl.-Ing.

(57) **Abstract**

The present invention is its several embodiments is a distributed supervisory vehicle control system having a vehicle that includes: one or more supervisory processing interfaces and a sensor suite comprising sensors for measuring one or more vehicle states; a wireless network interface for receiving one or more externally generated commands via data packets; and a guidance processing interface operably connected to the wireless network interface wherein the guidance processing receives sensor suite signals and wherein the guidance processing interface processes the externally generated commands and provides vehicle system commands. Preferably, the wireless network interface receives externally generated commands as data packets according to Transmission Control Protocol/Internet Protocol (TCP/IP).

## Description

### FIELD OF INVENTION

The invention relates generally to vehicles having guidance, navigation, and control processing in a wireless network and particularly relates to autonomous and semi-autonomous vehicles being in mutual wireless communication over an IP data network.

### BACKGROUND

Traditionally, remote controlled (RC) vehicles use radio frequencies for navigation and guidance. The control signals are usually directly modulated onto an analog carrier then transmitted through radio bands by a control module. The vehicle has a receiver that demodulates the carrier and responds to the control signals. For recreational RC applications, there is no sensory feedback provided by the vehicle itself except active visual monitoring by the controller. For certain military and aeronautical applications, the vehicle may be equipped with sensors that can be monitored by the controller. Such applications may consume a large bandwidth in the feedback path and require higher power and frequency carrier than their recreational counterpart.

Radio frequency is highly susceptible to jamming and interference from other transmitters. In essence, each vehicle will require its own frequency for carrier in order to avoid interference. In addition, the transmitter needs to generate a moderately high power carrier while still remain portable. The control signal, as well as feedback information provided by the vehicle, is limited by the relatively low bandwidth of the carrier. In fact, the feedback information will needs its own carrier frequency in order to avoid conflict with the control signal.

Remote control range is limited by the power of the transmitter. Since these devices must observe FCC guidelines, transmission power is very limited, resulting in very limited range of control. In addition, since the control module must provide power to the transmitter while being portable, the size of the battery becomes a limiting factor to the carrier strength as well. Each control and feedback path will require its own frequency in the radio band, unless the carrier is further coded or modulated, resulting in additional complexity in the receiver.

Presently robots for entertainment purposes may receive wireless commands as data packet from a computer user interface connected over local area network to a wireless access point using Internet Protocol. Wireless access points and repeaters may be mounted to and powered by land vehicles. There is a need for mobile wireless access points and wireless nodes to be able to receive guidance instructions and operate in autonomous and semi-autonomous fashion.

### SUMMARY

The present invention is its several embodiments is a distributed supervisory vehicle control system having a vehicle that includes: one or more supervisory processing interfaces and a sensor suite comprising sensors for measuring one or more vehicle states; a wireless network interface for receiving one or more externally generated commands via data packets; and a guidance processing interface operably connected to the wireless network interface wherein the guidance processing receives sensor suite signals and wherein the guidance processing interface processes the externally generated commands and provides vehicle system commands. Preferably, the wireless network interface receives externally generated commands as data packets according to Transmission Control Protocol/Internet Protocol (TCP/IP). In some embodiments, the one or more externally generated commands comprise one or more navigation goals from one or more supervisory processing interfaces. In some embodiments, the externally generated commands comprise one or more steering commands one or more supervisory processing interfaces. Preferably, the wireless network interface transmits the measured one or more ground vehicle states to the one or more supervisory processors. For some of the vehicle embodiments of the system, the wireless network interface further comprises processing for data packet forwarding particularly having a wireless network access point. In addition to vehicle body sensors, the sensor suite further comprises a visual band sensing element preferably having recording and temporary and permanent local storage and local signal processing particularly filtering and stabilization of signals from the visual band sensing element. In addition, the visual image processing preferably includes pattern recognition processing for the autonomous vehicles. For other vehicle embodiments, the sensor suite may include an infrared band sensing element with recording and temporary and permanent storage and signal processing particularly filtering of the signals from the infrared band sensing element. In the autonomous vehicles, it is preferred that the infrared processing means of signals comprises pattern recognition processing. The sensor suite may also an audio sensing element such as a microphone and one or more temperature sensing elements, preferably distributed about the vehicle. In some embodiments, the ground vehicle further includes an arm having tactile feedback sensors and force feedback sensors. The directing processors of the supervisory interfaces preferably have a graphic user interfaces. For those vehicles operating in outside environments, the sensor suite preferably includes a global positioning system.

### DESCRIPTION OF THE DRAWINGS

FIG. 1 illustrates a general system architecture of the present invention;
FIG. 2 illustrates the span and handoff properties of a autonomous and semi-autonomous vehicles in communication via a mobile IP network;
FIG. 3 illustrates the general guidance, navigation and control of the autonomous and semi-autonomous vehicles of the present invention;
FIG. 4 illustrates the mobile group roaming and station-keeping of the semi-autonomous vehicles being mobile IP nodes about the autonomous or semi-autonomous vehicles being a mobile IP wireless access point; and
FIG. 5 illustrates the mobile group constellation and station-keeping of the semi-autonomous air vehicles being mobile IP nodes about the autonomous or semi-autonomous air vehicles being a mobile IP wireless access point and the cooperation with a cellular base station and an enhanced autonomous air vehicles being both a cellular node and a mobile IP wireless access point.

### DETAILED DESCRIPTION

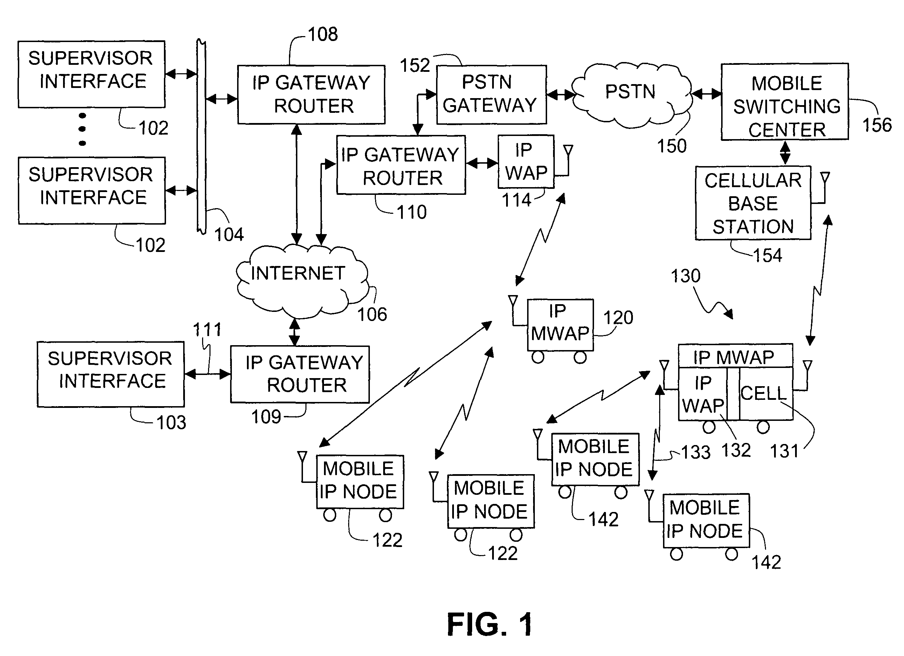

Illustrated in FIG. 1 is an example of embodiment of the present invention whereby the mobile IP-based wireless access point (MIPWAP) vehicles receive and send their supervisory commands and provide state feedback respectively and one or more mobile IP-based wireless node (MIPWB) vehicle receive supervisory commands and send state feed. In this example, one or more human supervisor may interact with one or more MIPWAP vehicles via a supervisor interface 102. The supervisor interface 102 is preferably connected to a network 104 and then to the Internet 106 via a first gateway router 108 or the supervisor interface 103 may be directly connected 111 to a second IP gateway router 109. A stationary wireless access point 114 supporting TCP/IP and operating according to IEEE 802.11b or 802.11g for example is connected to the Internet 106 via a third IP gateway router 110. From the stationary wireless access point 114, data packets are sent to the first MIPWAP 120 preferably according to Mobile IP. Thus, the router connected to the first MIPWAP's home agent, i.e., the first IP gateway router 108 for example, is a tunnel entry point. The exit point is determined via Mobile IP's Registration procedure were foreign Agent Discover in employed to determine whether the MIPWAP 120 is connected to a foreign link, the third IP gateway router 110 for example and to acquire the care-of address of the third IP gateway router 110 to then register this care-of address with the home agent. The care-of address can then be used to encapsulate IP payloads for tunneling between the first IP gateway router 108 and the third gateway router 110. The MIPWAP120 then functions as a hub or switch to forward packets to and from its associated MIPWBs 122. In addition, where distances may exceed the range of the stationary IP wireless access point 114 or a combination of the the stationary IP wireless access point 114 and two or more MIPWAPs 120 in an ad hoc packet-forwarding network, the third IP gateway router may connect to the Public Switched Telephone Network (PSTN) 150 via a PSTN gateway 152. A cellular base station 154 connects to a mobile switching center 156. A second MIPWAP embodiment 130 has a cellular telephone system interface 131where the cellular signals are converted 132 via a computer telephone interface (CTI) into data packets that are sent via the IP wireless portion 133 of the second MIPWAP 130. The second MIPWAP, or enhanced MIPWAP (EMIPWAP) 130, then functions as a hub or switch to forward packets to and from its associated MIPWBs 142.

In the first example embodiment of the operator interface 102, the user (not shown) conveys information to and receives information from the Internet 106 by means of an Internet Service Provider (ISP), for example, using a dial-up modem, digital subscriber line (DSL) or cable modem, or T1/T3 line. The ISP then provides the link to the system of core routers and other network devices capable of communicating guidance and control information to and from the operator interface 102 located any where in the world. The operator interface 102 may be directly coupled to the ISP, or be embedded within a subnet including an edge router in a LAN, WAN, or MAN.

An alternative operator interface also includes a computer and/or a joystick consistent with that described above. In this example embodiment, however, the interface includes a wireless modem. The wireless modem may be used to direct access the digital cellular system 154, 156 through the first base station 154. Although the user interface in this example may lie within the base station subsystem as the one or more base stations through which one or more of the remotely guided ground vehicles 120, 122, 130 and air vehicles 520, 522, and 530 interact, the operator interface 102 may be geographically remote from the vehicle. In this example embodiment then, the operator interface 102 as well as the remotely guided ground vehicles 120, 122, 130 and air vehicles 520, 522, and 530 are capable of roaming throughout areas in which there is cellular coverage.

Instead of using a dedicated carrier for control signal, this invention uses a wireless LAN (WLAN) as a carrier for the IP WAP embodiment. The RC vehicle may then be identified using a standard mobile LAN addressing scheme. The control of the remotely guided ground vehicles 120, 122, 130 and air vehicles 520, 522, and 530 becomes an exercise in networking domain instead of signal domain. Interference from other radio band signals becomes a non-issue. WLAN is typically established as an infrastructure inside a building or community, and its wide bandwidth and abundance of points of presence (POP) makes it rather difficult to jam. In addition, WLAN hubs have a range of 300 meters, and fully repeatable, resulting in far greater range than traditional radio frequency carriers.

As an additional measure, WLAN inherently incorporates encryption. Security and integrity of control and feedback signals are enhanced by encryption and the ability to do authentication is also possible. Since WLAN is a fully networked infrastructure, a single controller may control multiple vehicles, and vice versa, resulting in full flexibility in controlling locomotion of the vehicle. In addition to using basic human control, each controller can be aided by artificial intelligence to provide steering assistance. The artificial intelligence can reside purely on the vehicle or the controller, or distributed between the two, depending on response time requirements.

Present wireless LAN standards, especially IEEE 802.11a, provides substantially amount of bandwidth for bi-directional data between the vehicle and the controller. The control module need not be equipped with a dedicated transmitter/receiver for the vehicle. The control module will only require a network connection that is either part of the WLAN, encompassing the WLAN, or connecting to it.
In essence, the control module battery no longer becomes a limiting factor for the range of remote control. The high bandwidth also provides the ability for enhanced sensory feedback. The vehicles may also have one or more arms or extensions to allow the vehicle to interact with its environment outside of the general confines of the vehicle. The arm or extension may have tactile, force feedback and the like. Multiple visual, audio as well as tactile feedbacks are all possible according to instrumentation alternatives. Advanced instrument panels may be employed to facilitate more embedded levels of control, i.e., deeper than basic higher-level supervisory control. This enhanced level of feedback provides an immersive experience for the human controller or supervisor.

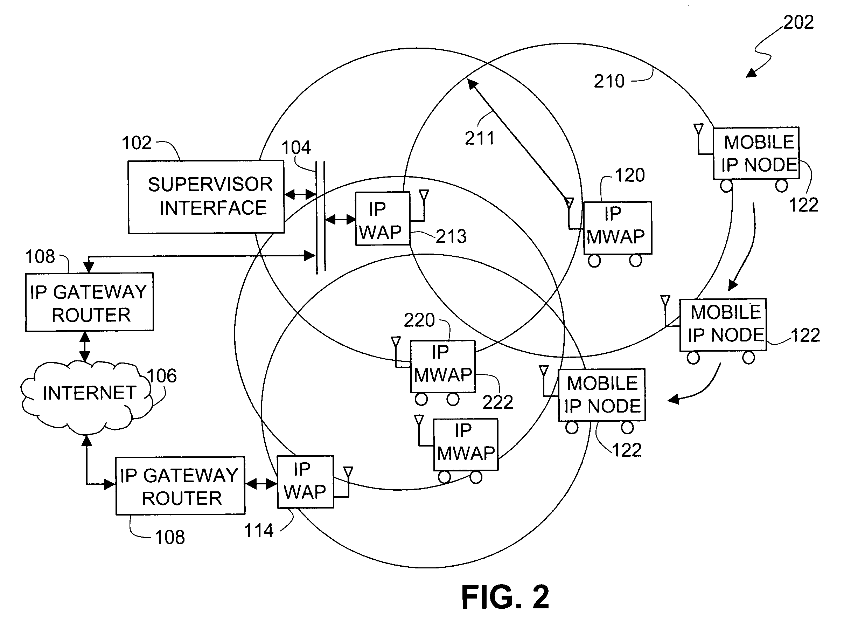

FIG. 2 further illustrates the wireless IP network provided by the first MIPWAPs 120 where a supervisor interacts with the mobile network via supervisor interface 102, a local area network 104 and an IP wireless access point 213. In this example, the IP wireless access point 213 is in direct communication with the first MIPWAP 120 and the first MIPWAP 120 is in communication with a MIPWB 122 that is moving in a clockwise direction about the perimeter 210 of the effective range 211of the MIPWAP 120. When the MIPWB 122 is beyond the effective range 211 of the MIPWAP 120, the MIPWB 122 may be handed off to a next MIPWAP 220 of the same local area network as the first MIPWAP 120 or the MIPWB 122 may be handed of to a MIPWAP 222 of a foreign agent and Mobile IP Registration and Discovery procedures follow.

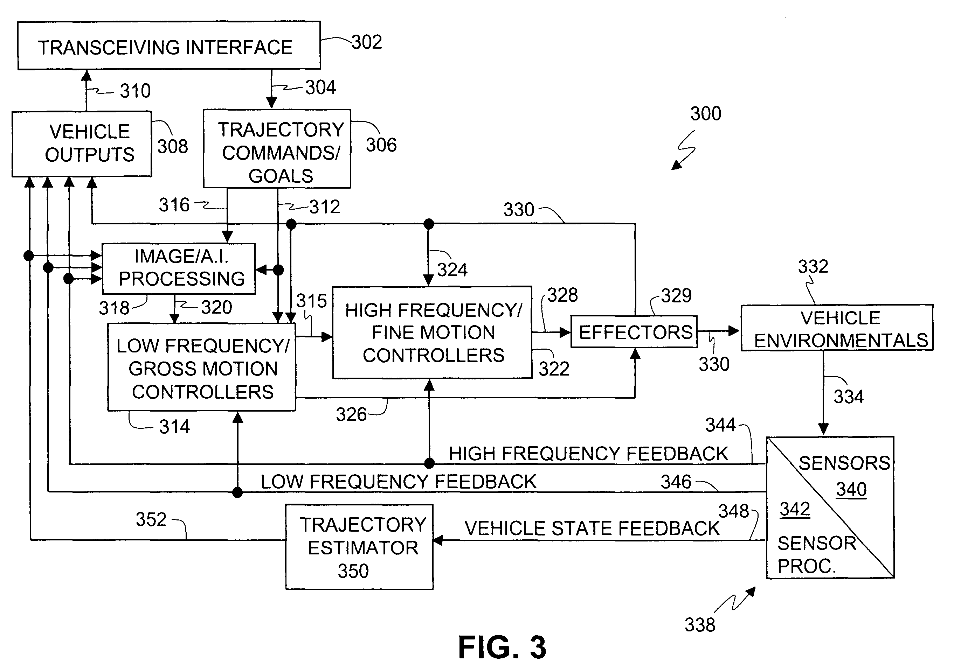

FIG. 3 illustrates by way of example the general guidance, navigation and control (GNC) processing 300 of each of the MIPWAP 120, EMIPWAP 130, and MIPWB 122 vehicles. These vehicles may be ground vehicles, air vehicles or watercraft or combinations thereof. The transceiving interface 302 places the incoming IP data into a signal paths 304 that are in turn placed into a stage 306 for steering commands, trajectory commands, or where additional autonomy is supported, goals. The transceiving interface 302 receives, from a vehicle output stage 308, the vehicle outputs 310 to be sent to the one or more supervisory levels via the wireless IP network. In this example GNC processing 300, the low frequency commands 312, for example steering commands, are sent from the trajectory commands/goals stage 306 to the low frequency/gross motion controller 314. The low frequency/gross motion controller 314 preferably has executable rules and steps executed within a microprocessor. Also in this example GNC processing 300, the goals 316 and low frequency commands 316 are sent from the trajectory commands/goals stage 306 to the image processing 318 than may include artificial intelligence processing. The artificial intelligence processing may include expert systems, fuzzy logic, adaptive neural networks, genetic algorithm, goal seeking algorithms, and any combination thereof. The image processing may include scene matching, edge matching, centroiding, constellation matching, projected three-dimensional image matching, and any combinations thereof.

The image processing 318 sends low frequency commands 318 such as steering and velocity magnitude to the low frequency/gross motion controller 314. The low frequency/gross motion controller 314 harmonizes or otherwise performs arbitration between the image processing low frequency commands 318 and the trajectory commands/goals stage low frequency commands 312. The rules of harmonization and arbitration may be preloaded in the low frequency/gross motion controller 314, sent as overrides via the transceiving interface 302, and may be modified based on the situation awareness provided by the image processing 318. Where gross motion of the vehicle requires correction, the low frequency/gross motion controller 314 sends low frequency commands 326 to effectors 329. For example, in the case where steering changes are required, the low frequency commands 326 direct the effectors 328 to produce a direction heading change in the vehicle. The low frequency/gross motion controller 314 also sends commands 315 to the high frequency/fine motion controllers 322. High frequency control may include angular rate control of an air vehicle, for example, or the suspension control of a land vehicle. Fine motion control may include the control one or more extendable arms of the vehicle, for example, and may include the pan and zoom of image sensors of the sensor suite 338. The high frequency/fine motion controllers 322 send command signals 330 to the effectors 329 to produce rate, angle or position changes in the effectors.

The effectors are preferably a distributed suite of motors or other actuators, including electromagnetic and piezoelectric devices, capable of changing the forces on the vehicle either directly or by drawing on the environment in which the vehicle operates. For land vehicles, this may be a change in the orientation of one or more wheels in contact with a friction surface or a differential torque change in a tracked vehicle. For watercraft, this may be a change in rudder deflection and for air vehicles, this may be a change in rudder and may include changes in elevator deflection for example. The effectors may instrumented providing for the sensing changes in the effectors 329, for example changes in rudder deflection, that may sent 330 the low frequency/gross motion controller 314, the high frequency/ fine motion controllers 322, the vehicle output stage 308. The resulting changes in the status of the effectors 330 then produces one or more changes in the location and orientation of the vehicle and its relationship with its immediate environment 332. These immediate environment 332 of the vehicle is sensed via a sensor suite having sensors 340 and sensor processing 338. The sensors 340 may measure vehicle angular rates, vehicle linear acceleration, and may include image sensors and other sensors not already part of the instrumented effectors 329. The sensor suite may include absolute position and velocity sensors such as a Global Positioning System (GPS). The high frequency feedback signals 344 from the sensor processing 342 of the sensor suite 338 is sent to the high frequency/ fine motion controllers 322 and may be sent to the images processing 318 and the vehicle output stage 308. The low frequency feedback 346 is sent to the low frequency/gross motion controllers 314 and may be sent to the images processing 318 and the vehicle output stage 308. The processed sensed signals that comprise the vehicle state feedback 348, for example vehicle location, direction, velocity and orientation, may be sent to a trajectory estimator 350 that provides a refined vehicle state estimate 352, and may provide trajectory state projections, to the signal processing 318 particularly where it includes or is replaced by artificial intelligence processing, and may be provided to the vehicle output stage 308. Other ground vehicle commands 315 may include forward, reverse and park or hold position commands, decelerating and accelerating commands. Other vehicle status indicators that may be sensed include battery level, weight of total load or estimated payload, actual acceleration, speed, vibration levels, outside, cabin payload and engine temperatures, ground inclination, i.e., local level, and audio levels via microphones.

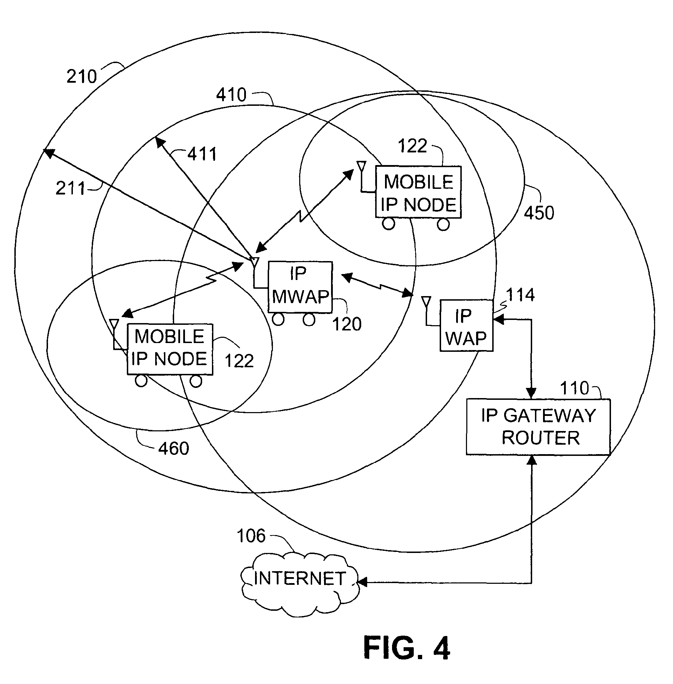

FIG. 4 illustrates the mobile group roaming and station-keeping of the semi-autonomous vehicles being mobile IP nodes about the autonomous or semi-autonomous vehicles being a mobile IP wireless access point. FIG. 4 further shows the exploitation of the autonomous or semi-autonomous capability of each of the MIPWAP 120, EMIPWAP 130, and MIPWB 122 vehicles made possible by their respective GNC processing 300. In this example, an MIPWAP 120 is in communication with a the stationary IP wireless access point 114 operably connected to the Internet 106 and its supervisor via an IP gateway router 110 of a foreign agent via Mobile IP. In this example, the MIPWAP 120 is in communication with and providing packer forwarding for two MIPWBs 122. While the MIPWAP 120 may have an effective wireless range 211 and perimeter 210, the supervisory goal may be to maintain the MIPWB 122 vehicles within a highly effective range 411 and perimeter 410. Accordingly, goals and steering commands either separately or collectively may be sent to each of the MIPWB 122 vehicles to maintain the highly effective range 411 and perimeter 410 of the MIPWAP 120. In addition, to bound the autonomous nature of the MIPWB 122 vehicles provided by their GNC, the MIPWAP 120 generate or pass on relative station-keeping goals or parameters in order to maintain a constellation, for example, or to prevent one MIPWB 122 vehicle from colliding with another, as another example.

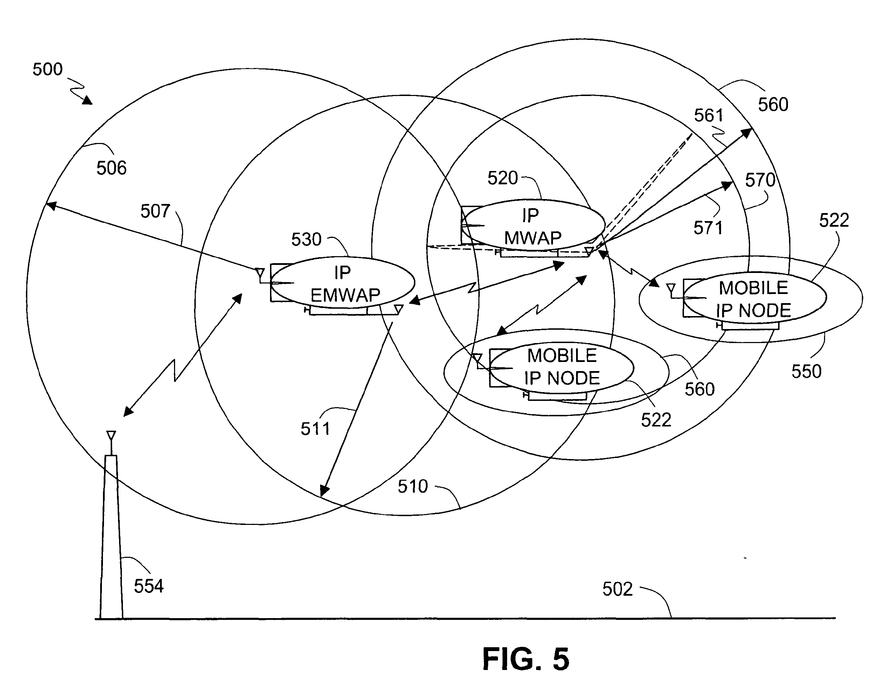

FIG. 5 illustrates the mobile group constellation and station-keeping of the semi-autonomous air vehicles being mobile IP nodes about the autonomous or semi-autonomous air vehicles being a mobile IP wireless access point and the cooperation with a cellular base station and an enhanced autonomous air vehicles being both a cellular node and a mobile IP wireless access point. FIG. 5 further illustrates by example an air vehicle constellation above local ground level 502 where a cellular base station 554 transmits cellular signals to an air vehicle EMIPWAP 530 within the effective cell perimeter 506 of the cellular base station 554. The effective cellular range 506 is typically longer than the IP WAP range 511 of the EMIPWAP 530. The EMIPWAP 530 converts the received cellular signals to data packets and forwards the data packets to an air vehicle MIPWAP 520 having two air vehicle MIPWBs 522 within the perimeter 560 of the effective range 561 of the air vehicle MIPWAP 520. My exploiting the autonomous or semi-autonomous capabilities afforded the MIPWBs 522, the air vehicle MIPWAP 520, and the air vehicle EMIPWAP 530 by their on-board GNC processing, the MIPWBs 522 may be given goals to remain within a very effective range 571 and perimeter 570 of the air vehicle MIPWAP 520. In addition, the MIPWBs 522 may be given goals or parameter to maintain stations 550, 560 relative to the air vehicle MIPWAP 520 and the stations may be used to enhance the reconnaissance and force effectiveness of the constellation and may be used to minimize in air collisions. The cellular base station 554 may be replaced by a radio tower and transmitter or other RF transmitting assembly providing encoded signals to an MIPWAP 530 enabled to receive the encoded signals and translated the signals to data packets for subsequent IP WAP transmissions to the air vehicle MIPWB 522

For the cellular base station embodiments, the system may be described as a distributed remote control system with which an operator may remotely navigate a vehicle according to one embodiment of the present invention. The remote control system of the cellular embodiment comprises one or more user interfaces represented by the plurality of operator interfaces 102, a communications network including a digital cellular system 156, 154, and the remotely guided ground vehicles 120, 122, 130 and air vehicles 520, 522, and 530 subject to the guidance information transmitted from the operator interface through the digital cellular system. The preferred communications network in this embodiment comprises at least two underlying network modalities including a distributed, packet-switching (DPS) network and a wireless, circuit-switched communication (WCSC) network.

In the embodiment having the preferred communication network, the DPS comprises one or more nodes utilizing packet protocols that permit the communication of control and sensory signals over an extended geographic region separating the operator interface 102 from the remotely guided ground vehicles 120, 122, 130 and air vehicles 520, 522, and 530. The network in the preferred embodiments is the Internet 106, and generally relies on a protocol stack such as TCP/IP to transmit data packets between various nodes, although other forms of networks such as token ring and ATM would also be suitable. Use of the term Internet herein generally encompasses a system including one or more metropolitan area networks (MAN), wide area networks (WAN), or local area networks (LAN) necessary to communicate signals between the operator interface 102 and remotely guided ground vehicles 120, 122, 130 and air vehicles 520, 522, and 530.

In the preferred cellular embodiments, the WCSC network comprises one or more radio frequency accesses points though with a user may exchange navigational and sensory signals using existing communications infrastructures. Preferably, the WCSC network includes the well digital cellular system 154, 156 operating in concert with the PSTN 150. The digital cellular system comprises a series of radio frequency transceivers, namely base stations 154, through which various mobile stations may connect within the regions of coverage, i.e., cells. The base stations are connected to a mobile switch center (MSC) 156 for registering caller mobile stations and tracking their location.

The user interface 102 may manifest itself in any number of different forms. The first representative user interface may consist of a personal computer, workstation, mainframe, internet applicant, personal digital assistant, or tablet computer, for example. A representative computer (not shown) generally comprises a central processing unit (not shown) with random access memory (not shown), data input device such as a keyboard (not shown), graphical display such as a monitor (not shown), and an input/output device (not shown) operatively coupled to the Internet 106. Operating on the computer (not shown) is an operating system and one or more software programs including a graphical user interface (GUI) for interacting with a user and conveying visual or symbolic information related the position, orientation, and operation status of the remotely guided ground vehicles 120, 122, 130 and air vehicles 520, 522, and 530, generally RC vehicles.

The interface 102 in some embodiments further includes a joystick or other manual position-sensitive controller for inputting navigation or guidance signals. In some embodiments, the joystick includes force feedback and/or tactile response.

In practice, the remote controlled vehicle requires a wireless LAN transceiver, network protocol stack, control logic and sensors. Each MIPWB vehicle operates like a mobile LAN endpoint on the WLAN. The mobility can be built into either layer 2 or layer 3 of the network protocol stack. In these example embodiments, the invention uses mobile IP as the carrier protocol. The controller has a well-known network address for all of the RC vehicles under its control. Upon powering up, each of the RC vehicles authenticates itself with this controller. Effectively, each of the vehicles "signs in" with the main controller.
A simple "hello" and timeout protocol keeps the connection alive between vehicle and controller. Once the connection is established, the RC vehicle identifies itself with the controller and supplies its model number, capabilities, and current configuration. The controller may download new configuration to the vehicle if necessary. Once the new configuration is downloaded, the controller may enable locomotion and start steering or giving goals to the RC vehicle. The vehicle will start monitoring its sensors and send the information back to the controller. For example, the vehicle may be equipped with a digital camera and the video feed is constantly sent back to the controller via WLAN. When the vehicle crosses to a different WLAN domain, it will re-establish itself with the controller through the authentication process again, preferably using Mobile IP.

The following features and/or combinations of features also constitute advantageous embodiments of the described and/or claimed invention:
- The claimed and/or described ground vehicle wherein the wireless network interface receives the one or more externally generated commands as data packets according to Transmission Control Protocol/Internet Protocol;
- The claimed and/or described ground vehicle wherein the one or more externally generated commands comprise one or more navigation goals from one or more supervisory processing interfaces;
- The claimed and/or described ground vehicle wherein the one or more externally generated commands comprise one or more steering commands one or more supervisory processing interfaces;
- The claimed and/or described ground vehicle wherein the wireless network interface transmits the measured one or more ground vehicle states to the one or more supervisory processors;
- The claimed and/or described ground vehicle wherein the wireless network interface further comprises processing for data packet forwarding;
- The claimed and/or described ground vehicle wherein the wireless network interface further comprises a wireless network access point;
- The claimed and/or described ground vehicle wherein the sensor suite further comprises a visual band sensing element;
- The claimed and/or described ground vehicle wherein the infrared processing means of signals comprises pattern recognition processing.

## Claims

1. A distributed supervisory vehicle control system comprising
a vehicle comprising:
a sensor suite comprising sensors for measuring one or more vehicle states;
a wireless network interface for receiving one or more externally generated commands via data packets; and
a guidance processing interface operably connected to the wireless network interface wherein the guidance processing receives sensor suite signals and wherein the guidance processing interface processes the externally generated commands and provides vehicle system commands; and
one or more supervisory processing interfaces.

2. The ground vehicle of claim 1 wherein the sensor suite further comprises recording means and signal processing means of signals from the visual band sensing element.

3. The ground vehicle of claim 2 wherein the sensor suite wherein the visual image processing comprises pattern recognition processing.

4. The ground vehicle of claim 1 wherein the sensor suite further comprises an infrared band sensing element.

5. The ground vehicle of claim 4 wherein the sensor suite further comprises infrared recording means and signal processing means from the infrared band sensing element.

6. The ground vehicle of claim 1 wherein the sensor suite further comprises audio sensing element.

7. The ground vehicle of claim 1 wherein the sensor suite further comprises temperature sensing element.

8. The ground vehicle of claim 1 wherein the ground vehicle further comprises an arm having tactile feedback sensors.

9. The ground vehicle of claim 1 wherein the ground vehicle further comprises an arm having force feedback sensors.

10. The ground vehicle of claim 1 wherein the sensor suite further comprises a global positioning system.
